# EUROPEAN PATENT APPLICATION

(11) **EP 2 739 006 A1**
(43) Date of publication of application: **04.06.2014**
(21) Application number: 13805723.7
(22) Date of filing: 19.04.2013
(51) Int. Cl.: H04L 29/06

(54) **VALIDATION PROCESSING METHOD, USER EQUIPMENT, AND SERVER**

(30) Priority: 21.09.2012 CN 201210355371
(71) Applicant: Huawei Technologies Co., Ltd., Shenzhen, Guangdong 518129 (CN)
(72) Inventor: HE, Xiuqiang, Shenzhen, Guangdong 51829 (CN); ZHANG, Gong, Shenzhen, Guangdong 51829 (CN)
(74) Representative: Pfenning, Meinig & Partner GbR
(86) International application number: PCT/CN2013/074450
(87) International publication number: WO 2014/044052

(57) **Abstract**

Embodiments of the present invention provide a user verification processing method, a user equipment, and a server. The method includes: receiving from a server a notification message that includes an action verification code instruction; obtaining sensor data generated when a user performs an action corresponding to the action verification code instruction; and feeding back verification information to the server according to the sensor data. The user verification processing method, the user equipment, and the server provided in the embodiments of the present invention can increase difficulty of cracking a verification code and improve security of the verification code.

## Description

### TECHNICAL FIELD

The present invention relates to communication technologies, and in particular, to a user verification processing method, a user equipment, and a server.

### BACKGROUND

A verification code is an abbreviation of completely automated public turing test to tell computers and humans apart (Completely Automated Public Turing test to tell Computers and Humans Apart, CAPTCHA for short), and is a completely automated public program telling whether a user is a computer or a human.

In the prior art, a most frequently used verification code is an image generated from a string of digits or symbols that are generated randomly, where the image is interpolated with interference such as randomly drawn straight lines and dots. A user uses naked eyes to recognize verification code information in the image, inputs the recognized information into a form, and submits the form to a website for verification. A specific function is not available unless the verification succeeds.

However, such a verification code made up of irregular characters is easy to crack. For example, a digital image may be obtained through a screenshot operation, and the digital image is processed by mathematical means such as projection, blurring, sharpening, thinning, and edge detection to obtain contour information of the verification code, and then the verification code is recognized by means of artificial intelligence, pattern recognition, and the like, which makes a conventional verification code vulnerable to more and more security risks.

### SUMMARY

Embodiments of the present invention provide a user verification processing method, a user equipment, and a server, to improve security of a verification code.

In a first aspect, an embodiment of the present invention provides a user verification processing method, including:
receiving from a server a notification message that includes an action verification code instruction;
obtaining sensor data generated when a user performs an action corresponding to the action verification code instruction; and
feeding back verification information to the server according to the sensor data.

With reference to the first aspect, in a first possible implementation manner of the first aspect, the feeding back verification information to the server according to the sensor data includes:
performing verification processing of an action verification code for the sensor data, and sending verification result information to the server.

With reference to the first possible implementation manner of the first aspect, in a second possible implementation manner of the first aspect, before the performing verification processing of an action verification code for the sensor data, the method further includes:
preprocessing the sensor data to obtain characteristic information of the sensor data;
the performing verification processing of an action verification code for the sensor data includes:
   performing the verification processing of the action verification code according to the characteristic information.

With reference to the second possible implementation manner of the first aspect, in a third possible implementation manner of the first aspect, the preprocessing the sensor data to obtain characteristic information of the sensor data includes:
extracting fluctuation characteristic information of the sensor data;
the performing the verification processing of the action verification code according to the characteristic information includes:
   performing comparative verification processing for a fluctuation value in the fluctuation characteristic information and a preset threshold; and
   the sending verification result information to the server includes:
if the fluctuation value is greater than the preset threshold, sending verification result information indicative of verification success to the server.

With reference to the first aspect, in a fourth possible implementation manner of the first aspect, the feeding back verification information to the server according to the sensor data includes:
sending the sensor data to the server, so that the server performs verification processing of an action verification code according to the sensor data.

With reference to the fourth possible implementation manner of the first aspect, in a fifth possible implementation manner of the first aspect, before the sending the sensor data to the server, the method further includes:
preprocessing the sensor data to obtain characteristic information of the sensor data; and
the sending the sensor data to the server includes:
   sending the characteristic information of the sensor data to the server, so that the server performs the verification processing of the action verification code according to the characteristic information.

With reference to the fourth possible implementation manner of the first aspect, in a sixth possible implementation manner of the first aspect, before the sending the sensor data to the server, the method further includes:
preprocessing the sensor data, where the preprocessing includes at least one of the following types of processing:
   processing to reduce a sampling frequency of the sensor data;
   processing to extract a time domain characteristic and/or a frequency characteristic of the sensor data within a unit time window; and
   processing to compress the sensor data; and
the sending the sensor data to the server includes:
   sending the preprocessed sensor data to the server.

With reference to the first aspect or any one of the first to sixth possible implementation manners of the first aspect, in a seventh possible implementation manner of the first aspect, the receiving from a server a notification message that includes an action verification code instruction includes:
receiving an application service message sent by the server, where the action verification code instruction is embedded in the application service message.

With reference to the first aspect or any one of the first to sixth possible implementation manners of the first aspect, in an eighth possible implementation manner of the first aspect, the receiving from a server a notification message that includes an action verification code instruction includes:
receiving a short message sent by the server, where the short message includes the action verification code instruction described by a text; or
receiving a multimedia message sent by the server, where the multimedia message includes the action verification code instruction described by an image or animation; or
receiving a voice prompt message sent by the server, where the voice prompt message includes voice prompt information of the action verification code instruction.

With reference to the first aspect or any one of the first to sixth possible implementation manners of the first aspect, in a ninth possible implementation manner of the first aspect, the action verification code instruction includes at least one of the following instructions:
an instruction for instructing the user to perform a gesture operation;
an instruction for instructing the user to perform a body movement; and
an instruction for instructing the user to perform a specific task operation.

In a second aspect, an embodiment of the present invention further provides a user verification processing method, including:
sending a notification message that includes an action verification code instruction to a user equipment UE, so that the UE obtains sensor data generated when a user performs an action corresponding to the action verification code instruction;
receiving verification information, which is sent by the UE according to the sensor data; and
determining a verification result according to the verification information.

With reference to the second aspect, in a first possible implementation manner of the second aspect, the receiving verification information, which is sent by the UE according to the sensor data includes:
receiving verification result information sent by the UE after verification processing of an action verification code is performed for the sensor data.

With reference to the second aspect, in a second possible implementation manner of the second aspect, the receiving verification information, which is sent by the UE according to the sensor data includes:
receiving verification result information sent by the UE after verification processing of an action verification code is performed for characteristic information, where
the characteristic information is characteristic information obtained after the UE preprocesses the sensor data.

With reference to the second possible implementation manner of the second aspect, in a third possible implementation manner of the second aspect, the receiving verification result information sent by the UE after verification processing of an action verification code is performed for characteristic information includes:
receiving verification result information sent by the UE after the verification processing of the action verification code is performed according to fluctuation characteristic information, where
where the verification result information after the verification processing includes:
   verification result information indicating verification success when a fluctuation value in the fluctuation characteristic information in the sensor data is greater than a preset threshold.

With reference to the second aspect, in a fourth possible implementation manner of the second aspect, the receiving verification information, which is sent by the UE according to the sensor data includes:
receiving the sensor data sent by the UE; and
the determining a verification result according to the verification information includes:
   matching the sensor data with matching characteristic information to obtain a verification result.

With reference to the fourth possible implementation manner of the second aspect, in a fifth possible implementation manner of the second aspect, before the matching the sensor data with matching characteristic information, the method further includes:
sending a verification code test message that includes the action verification code instruction to at least one UE, so that the at least one UE obtains test sensor data generated when a user performs an action corresponding to the action verification code instruction;
receiving the test sensor data sent by the at least one UE; and
determining test sensor data of a public attribute in the test sensor data, and using the test sensor data of the public attribute as the matching characteristic information.

With reference to the fifth possible implementation manner of the second aspect, in a sixth possible implementation manner of the second aspect, before the determining test sensor data of a public attribute in the test sensor data, the method further includes:
preprocessing the test sensor data to obtain characteristic information of the sensor data; and
the determining test sensor data of a public attribute in the test sensor data, and using the test sensor data of the public attribute as the matching characteristic information, include:
   determining characteristic information of a public attribute in the characteristic information, and using the characteristic information of a public attribute as the matching characteristic information.

With reference to the fourth possible implementation manner of the second aspect, in a seventh possible implementation manner of the second aspect, before the matching the sensor data with matching characteristic information, the method further includes:
sending a verification code test message that includes the action verification code instruction to at least one UE, so that the at least one UE obtains test sensor data generated when a user performs an action corresponding to the action verification code instruction;
receiving the test sensor data sent by the at least one UE after the test sensor data is preprocessed; and
determining test sensor data of a public attribute in the preprocessed test sensor data, and using the preprocessed test sensor data of a public attribute as the matching characteristic information.

With reference to the second aspect or any one of the first to seventh possible implementation manners of the second aspect, in an eighth possible implementation manner of the second aspect, the sending a notification message that includes an action verification code instruction to a user equipment UE includes:
sending an application service message to the UE, where the action verification code instruction is embedded in the application service message.

With reference to the second aspect or any one of the first to seventh possible implementation manners of the second aspect, in a ninth possible implementation manner of the second aspect, the sending a notification message that includes an action verification code instruction to a user equipment UE includes:
sending a short message to the UE, where the short message includes the action verification code instruction described by a text; or
sending a multimedia message to the UE, where the multimedia message includes the action verification code instruction described by an image or animation; or
sending a voice prompt message to the UE, where the voice prompt message includes voice prompt information of the action verification code instruction.

With reference to the second aspect or any one of the first to seventh possible implementation manners of the second aspect, in a tenth possible implementation manner of the second aspect, the action verification code instruction includes at least one of the following instructions:
an instruction for instructing the user to perform a gesture operation;
an instruction for instructing the user to perform a body movement; and
an instruction for instructing the user to perform a specific task operation.

In a third aspect, an embodiment of the present invention provides a user equipment, including:
an instruction receiving unit, configured to receive from a server a notification message that includes an action verification code instruction;
a sensor, configured to generate sensor data according to an action corresponding to the action verification code instruction and performed by a user;
a data collecting unit, configured to obtain the sensor data; and
a data sending unit, configured to feed back verification information to the server according to the sensor data.

With reference to the third aspect, in a first possible implementation manner of the third aspect, the data sending unit is specifically configured to: perform verification processing of an action verification code for the sensor data, and send verification result information to the server.

With reference to the first possible implementation manner of the third aspect, in a second possible implementation manner of the third aspect, the data sending unit is specifically configured to: preprocess the sensor data to obtain characteristic information of the sensor data; and perform the verification processing of the action verification code according to the characteristic information, and send verification result information to the server.

With reference to the second possible implementation manner of the third aspect, in a third possible implementation manner of the third aspect, the data sending unit is specifically configured to: extract fluctuation characteristic information of the sensor data; perform comparative verification processing for a fluctuation value in the fluctuation characteristic information and a preset threshold; and, if the fluctuation value is greater than the preset threshold, send verification result information indicative of verification success to the server.

With reference to the third aspect, in a fourth possible implementation manner of the third aspect, the data sending unit is specifically configured to: send the sensor data to the server, so that the server performs verification processing of an action verification code according to the sensor data.

With reference to the fourth possible implementation manner of the third aspect, in a fifth possible implementation manner of the third aspect, the data sending unit is specifically configured to: preprocess the sensor data to obtain characteristic information of the sensor data; and send the characteristic information of the sensor data to the server, so that the server performs the verification processing of the action verification code according to the characteristic information.

With reference to the fourth possible implementation manner of the third aspect, in a sixth possible implementation manner of the third aspect, the data sending unit is specifically configured to preprocess the sensor data, and send the preprocessed sensor data to the server;
the preprocessing includes at least one of the following types of processing:
processing to reduce a sampling frequency of the sensor data;
processing to extract a time domain characteristic and/or a frequency characteristic of the sensor data within a unit time window; and
processing to compress the sensor data.

With reference to the third aspect or any one of the first to sixth possible implementation manners of the third aspect, in a seventh possible implementation manner of the third aspect, the instruction receiving unit is specifically configured to receive an application service message sent by the server, where the action verification code instruction is embedded in the application service message.

In a fourth aspect, an embodiment of the present invention provides a server, including:
a notification message sending unit, configured to send a notification message that includes an action verification code instruction to a user equipment UE, so that the UE obtains sensor data generated when a user performs an action corresponding to the action verification code instruction;
an information receiving unit, configured to receive verification information, which is sent by the UE according to the sensor data; and
a verifying unit, configured to determine a verification result according to the verification information.

With reference to the fourth aspect, in a first possible implementation manner of the fourth aspect, the information receiving unit is specifically configured to receive verification result information sent by the UE after verification processing of an action verification code is performed for the sensor data.

With reference to the fourth aspect, in a second possible implementation manner of the fourth aspect, the information receiving unit is specifically configured to receive verification result information sent by the UE after verification processing of an action verification code is performed for characteristic information, where
the characteristic information is characteristic information obtained after the UE preprocesses the sensor data.

With reference to the second possible implementation manner of the fourth aspect, in a third possible implementation manner of the fourth aspect, the information receiving unit is specifically configured to receive verification result information sent by the UE after the verification processing of the action verification code is performed according to fluctuation characteristic information, where
the verification result information after the verification processing includes: verification result information indicating verification success when a fluctuation value in the fluctuation characteristic information in the sensor data is greater than a preset threshold.

With reference to the fourth aspect, in a fourth possible implementation manner of the fourth aspect, the information receiving unit is specifically configured to receive the sensor data sent by the UE; and
the verifying unit is specifically configured to match the sensor data with matching characteristic information to obtain a verification result.

With reference to the fourth possible implementation manner of the fourth aspect, in a fifth possible implementation manner of the fourth aspect, the notification message sending unit is specifically configured to send a verification code test message that includes the action verification code instruction to at least one UE, so that the at least one UE obtains test sensor data generated when a user performs an action corresponding to the action verification code instruction;
the information receiving unit is specifically configured to receive the test sensor data sent by the at least one UE; and
the verifying unit is specifically configured to determine test sensor data of a public attribute in the test sensor data, and use the test sensor data of the public attribute as the matching characteristic information.

With reference to the fifth possible implementation manner of the fourth aspect, in a sixth possible implementation manner of the fourth aspect, the verifying unit is specifically configured to: preprocess the test sensor data to obtain characteristic information of the sensor data; and determine characteristic information of a public attribute in the characteristic information, and use the characteristic information of a public attribute as the matching characteristic information.

With reference to the fourth possible implementation manner of the fourth aspect, in a seventh possible implementation manner of the fourth aspect, the notification message sending unit is specifically configured to send a verification code test message that includes the action verification code instruction to at least one UE, so that the at least one UE obtains test sensor data generated when a user performs an action corresponding to the action verification code instruction;
the information receiving unit is specifically configured to receive the test sensor data sent by the at least one UE after the test sensor data is preprocessed; and
the verifying unit is specifically configured to determine test sensor data of a public attribute in the preprocessed test sensor data, and use the preprocessed test sensor data of a public attribute as the matching characteristic information.

With reference to the fourth aspect or any one of the first to seventh possible implementation manners of the fourth aspect, in an eighth possible implementation manner of the fourth aspect, the notification message sending unit is further configured to: send an application service message to the UE, where the action verification code instruction is embedded in the application service message.

According to the embodiments of the present invention, a UE receives from a server a notification message that includes an action verification code instruction, a user performs a specified action according to the action verification code instruction, sensor data generated when the user performs the action corresponding to the action verification code instruction is obtained from a sensor, and then verification information is fed back to the server according to the sensor data. The technical solutions in the embodiments of the present invention can recognize human actions effectively, prevent a verification code cracker from using image processing in combination with pattern recognition to crack an existing verification code, distinguish a human from a machine effectively, increase difficulty of cracking the verification code, and improve security of the verification code.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a persons of ordinary skill in the art may still derive other drawings from these accompanying drawings without creative efforts.
FIG. 1 is a flowchart of Embodiment 1 of a user verification method according to the present invention;
FIG. 2 is a flowchart of Embodiment 2 of a user verification method according to the present invention;
FIG. 3 is a flowchart of Embodiment 3 of a user verification method according to the present invention;
FIG. 4 is a flowchart of Embodiment 4 of a user verification method according to the present invention;
FIG. 5 is a flowchart of Embodiment 5 of a user verification method according to the present invention;
FIG. 6 is a flowchart of Embodiment 6 of a user verification method according to the present invention;
FIG. 7 is a flowchart of Embodiment 7 of a user verification method according to the present invention;
FIG. 8 is a flowchart of Embodiment 8 of a user verification method according to the present invention;
FIG. 9 is a flowchart of Embodiment 9 of a user verification method according to the present invention;
FIG. 10 is a flowchart of Embodiment 10 of a user verification method according to the present invention;
FIG. 11 is a flowchart of Embodiment 11 of a user verification method according to the present invention;
FIG. 12 is a flowchart of Embodiment 12 of a user verification method according to the present invention;
FIG. 13 is a flowchart of Embodiment 13 of a user verification method according to the present invention;
FIG. 14 is a flowchart of Embodiment 14 of a user verification method according to the present invention;
FIG. 15 is a flowchart of Embodiment 15 of a user verification method according to the present invention;
FIG. 16 is a flowchart of Embodiment 16 of a user verification method according to the present invention;
FIG. 17 is a flowchart of Embodiment 17 of a user verification method according to the present invention;
FIG. 18 is a schematic structural diagram of Embodiment 1 of a user equipment according to the present invention;
FIG. 19 is a schematic structural diagram of Embodiment 1 of a server according to the present invention;
FIG. 20 is a schematic structural diagram of Embodiment 2 of a user equipment according to the present invention; and
FIG. 21 is a schematic structural diagram of Embodiment 2 of a server according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

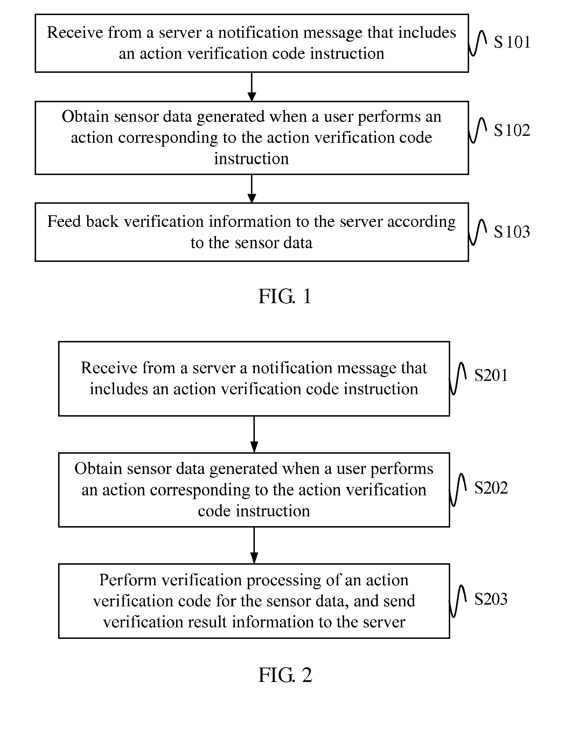

FIG. 1 is a flowchart of Embodiment 1 of a user verification method according to the present invention. As shown in FIG. 1, this embodiment describes a user verification method, assuming that the entity for performing the method is a user equipment. The user equipment (User Equipment, UE for short) in this embodiment may be a smartphone, a computer, and so on, and the embodiments of the present invention are not limited thereto. Any device equipped with a sensor and a data transmission function can serve as the user equipment in the embodiment of the present invention. The user verification method in this embodiment includes:

Step S101: Receive from a server a notification message that includes an action verification code instruction.

When a user logs in to an online bank for shopping or browses content through a client such as a forum, the user receives from a corresponding server a notification message that includes an action verification code instruction. The action verification code instruction may be an instruction for instructing the user to perform various specified actions. For example, if the UE is a smartphone, the user may hold the UE to "shake", "draw a circle", "walk", and so on; if the UE is a computer, the user may hold a peripheral device such as a mouse and keyboard to "shake", "draw a circle", "walk", and so on.

Step S102: Obtain sensor data generated when a user performs an action corresponding to the action verification code instruction.

The user performs the corresponding action according to the action verification code instruction in the notification message. Meanwhile, a sensor equipped in the user equipment can precisely recognize various simple user actions such as sitting, standing, walking, and running, and complicated actions such as making a call, and generate sensor data. The sensor equipped in the UE in the embodiment of the present invention may be an acceleration sensor, an orientation sensor, a proximity sensor, and so on, which is not particularly limited in the embodiment of the present invention. From a relevant standard interface, the UE may obtain the sensor data generated in the sensor when an action corresponding to the action verification code instruction is performed.

Step S103: Feed back verification information to the server according to the sensor data.

The UE may feed back verification information to the server according to the sensor data in multiple forms, for example, by feed backing a verification result to the server directly, or feeding back sensor data to the server, or feeding back preprocessed sensor data characteristic information to the server. The specific form of the verification information fed back by the UE to the server may depend on the difficulty of the action corresponding to the action verification code instruction or the amount of the sensor data. For example, if the action corresponding to the verification code instruction is simple, the UE sends verification success result information to the server directly; if the action corresponding to the verification code instruction is difficult and a lot of sensor data is generated, the UE may compress the sensor data, and feed back the compressed sensor data in the form of verification information to the server, which is not particularly limited in the present invention.

In the embodiment of the present invention, a UE receives from a server a notification message that includes an action verification code instruction, a user performs a specified action according to the action verification code instruction, and the UE may obtain from a sensor sensor data generated when the user performs the action corresponding to the action verification code instruction, and then feed back verification information to the server according to the sensor data. The embodiment of the present invention can recognize human actions effectively, prevent a verification code cracker from using image processing in combination with pattern recognition to crack an existing verification code, distinguish a human from a machine effectively, increase difficulty of cracking the verification code, and improve security of the verification code.

FIG. 2 is a flowchart of Embodiment 2 of a user verification method according to the present invention. As shown in FIG. 2, this embodiment describes a user verification method, assuming that the entity for performing the method is a user equipment. The user verification method in this embodiment includes:
Step S201: Receive from a server a notification message that includes an action verification code instruction.
Step S202: Obtain sensor data generated when a user performs an action corresponding to the action verification code instruction.
Step S203: Perform verification processing of an action verification code for the sensor data, and send verification result information to the server.
Step S201 and step S202 are similar to step S101 and step S102 in the embodiment shown in FIG. 1, which are not described again in this embodiment.

In step S203, the UE may perform verification processing of an action verification code directly for the sensor data generated when the user performs a simple action corresponding to the action verification code instruction, determine whether the action performed by the user is consistent with the action specified in the action verification code instruction, and send verification result information to the server directly, so that the server determines a verification result to allow or forbid the user to continue accessing the relevant website or forum. For example, if, according to a waveform graph of the sensor data, the UE determines that the action performed by the user is consistent with the action specified in the verification code instruction, the UE may send verification result information indicative of verification success to the server. The server receives the verification result information and determines that the verification result is success, and accordingly, allows the user to continue accessing the relevant website or forum. If various functions of the processor and the memory of the UE are powerful, the UE may match the sensor data with the matching sensor data stored in the UE to determine whether the action performed by the user is consistent with the action specified in the action verification code instruction.

In this embodiment, the UE performs verification processing of an action verification code for the sensor data directly, thereby providing convenience and efficiency and reducing the amount of data transmitted between the UE and the server. Meanwhile, the verification processing work is distributed onto the mobile phone, thereby reducing the processing load of the server and improving efficiency of the verification code service.

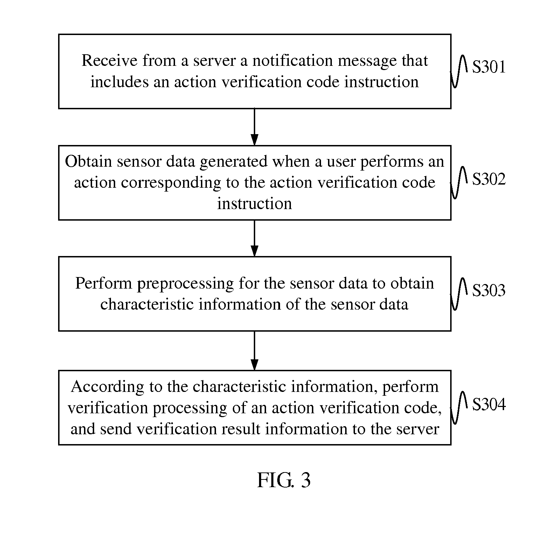

FIG. 3 is a flowchart of Embodiment 3 of a user verification method according to the present invention. As shown in FIG. 3, this embodiment describes a user verification method, assuming that the entity for performing the method is a user equipment. The user verification method in this embodiment includes:
Step S301: Receive from a server a notification message that includes an action verification code instruction.
Step S302: Obtain sensor data generated when a user performs an action corresponding to the action verification code instruction.
Step S303: Preprocess the sensor data to obtain characteristic information of the sensor data.
Step S304: Perform verification processing of an action verification code according to the characteristic information, and send verification result information to the server.
Step S301 and step S302 are similar to step S101 and step S102 in the embodiment shown in FIG. 1, which are not described again in this embodiment.

In step S303 and step S304, the UE may preprocess the obtained sensor data, and extract the characteristic information of the sensor data, for example, perform denoising processing for the sensor data, and extract characteristic information of various time-domain and frequency-domain statistics of the sensor data. The UE performs verification processing of an action verification code according to the characteristic information, determines whether the action performed by the user is consistent with the action specified in the action verification code instruction, and sends verification result information to the server directly, so that the server determines a verification result to allow or forbid the user to continue accessing the relevant website or forum. If various functions of the processor and the memory of the UE are powerful enough, the UE may match the characteristic information with the matching characteristic information stored in the UE to determine whether the action performed by the user is consistent with the action specified in the action verification code instruction.

In this embodiment, the UE preprocesses the sensor data, and obtains characteristic information of the sensor data. After the preprocessing, the UE does not need to perform verification processing for interference information such as noise, and only needs to perform verification processing of an action verification code according to the characteristic information, thereby preventing the interference information such as noise from affecting the UE's normal verification processing, and improving precision and accuracy of the UE's verification processing of the action verification code.

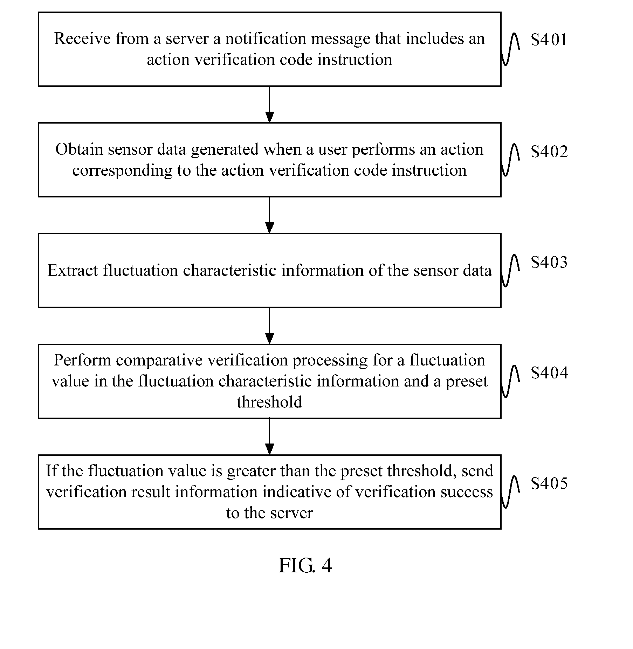

FIG. 4 is a flowchart of Embodiment 4 of a user verification method according to the present invention. As shown in FIG. 4, this embodiment describes a user verification method, assuming that the entity for performing the method is a user equipment. The user verification method in this embodiment includes:
Step S401: Receive from a server a notification message that includes an action verification code instruction.
Step S402: Obtain sensor data generated when a user performs an action corresponding to the action verification code instruction.
Step S403: Extract fluctuation characteristic information of the sensor data.
Step S404: Perform comparative verification processing for a fluctuation value in the fluctuation characteristic information and a preset threshold.
Step S405: If the fluctuation value is greater than the preset threshold, send verification result information indicative of verification success to the server.
Step S401 and step S402 are similar to step S101 and step S102 in the embodiment shown in FIG. 1, which are not described again in this embodiment.
In steps S403 to S405, based on the embodiment shown in FIG. 3, the preprocessing the sensor data to obtain characteristic information of the sensor data includes extracting fluctuation characteristic information of the sensor data; and the performing verification processing of an action verification code according to the characteristic information includes performing comparative verification for a fluctuation value in the fluctuation characteristic information and a preset threshold. Specifically, if the action in the action verification code instruction is a simple action such as "shaking" and "circling", the UE may preprocess the obtained sensor data, extract fluctuation characteristic information of three-dimensional data in the sensor data in a time period, and perform comparative verification processing for the fluctuation value and the preset threshold, where the preset threshold may be set according to actual needs and is not limited in the present invention. If the fluctuation value is greater than the preset threshold, the UE determines that the verification succeeds, and sends verification result information indicative of verification success to the server, so that the server allows the user to perform corresponding operations; if the fluctuation characteristic value is less than the preset threshold, the UE determines that the verification fails, and sends verification result information indicative of verification failure to the server, so that the server forbids the user to perform corresponding operations.

When the UE transmits the verification result information, the verification result information of the UE may be represented by an agreed password, random data compliant with a certain law, a text string, and so on, and transmitted between the UE and the server in combination with a data encryption mechanism to increase difficulty of "hacker attacks".

In the embodiment of the present invention, the UE preprocesses sensor data to obtain fluctuation characteristic information of the sensor data, and performs comparative verification processing for a fluctuation value and a preset threshold to obtain verification result information, which improves precision and accuracy of the UE's verification processing of an action verification code, and is easy to implement.

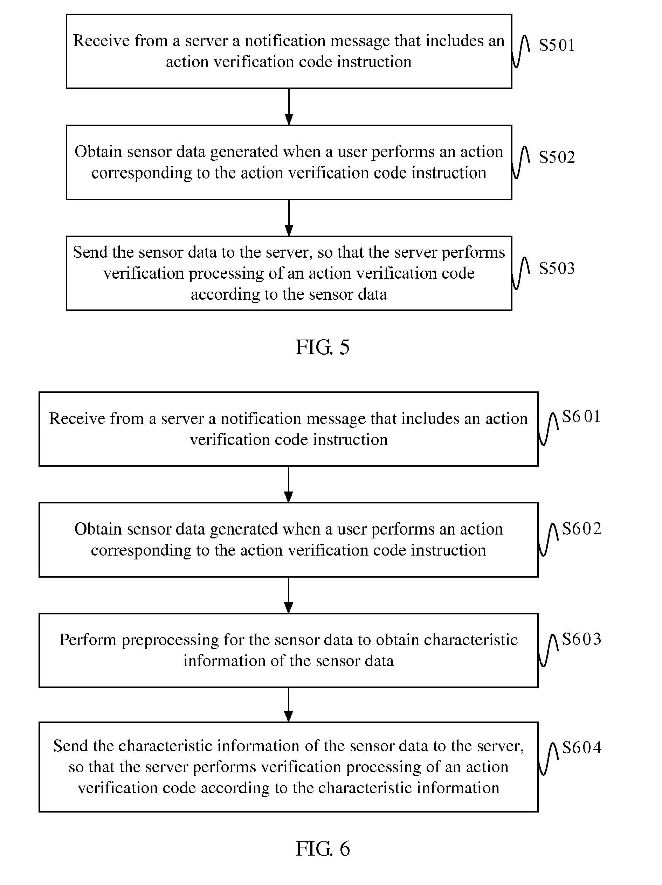

FIG. 5 is a flowchart of Embodiment 5 of a user verification method according to the present invention. As shown in FIG. 5, this embodiment describes a user verification method, assuming that the entity for performing the method is a user equipment. The user verification method in this embodiment includes:
Step S501: Receive from a server a notification message that includes an action verification code instruction.
Step S502: Obtain sensor data generated when a user performs an action corresponding to the action verification code instruction.
Step S503: Send the sensor data to the server, so that the server performs verification processing of an action verification code according to the sensor data.
Step S501 and step S502 are similar to step S101 and step S102 in the embodiment shown in FIG. 1, which are not described again in this embodiment.

In a specific implementation process, if the action verification code instruction instructs the user to perform various specified actions that are complicated, plenty of resources and time have to be wasted by the verification processing of an action verification code on the user equipment side, so the user equipment may send sensor data to the server so that the server performs the verification processing of the action verification code according to the sensor data.

In the embodiment of the present invention, the user equipment sends sensor data to the server, and the server performs verification processing of an action verification code according to the sensor data, thereby implementing verification processing for the sensor data generated when the user performs various complicated actions corresponding to the action verification code instruction, preventing a verification code cracker from using image processing in combination with pattern recognition to crack a verification code, distinguishing a human from a machine effectively, increasing difficulty of cracking the verification code, and improving security of the verification code.

FIG. 6 is a flowchart of Embodiment 6 of a user verification method according to the present invention. As shown in FIG. 6, this embodiment describes a user verification method, assuming that the entity for performing the method is a user equipment. The user verification method in this embodiment includes:
Step S601: Receive from a server a notification message that includes an action verification code instruction.
Step S602: Obtain sensor data generated when a user performs an action corresponding to the action verification code instruction.
Step S603: Preprocess the sensor data to obtain characteristic information of the sensor data.
Step S604: Send the characteristic information of the sensor data to the server, so that the server performs verification processing of an action verification code according to the characteristic information.
Step S601 and step S602 are similar to step S101 and step S102 in the embodiment shown in FIG. 1, which are not described again in this embodiment.

In a specific implementation process, based on the embodiment shown in FIG. 5, before the sending the sensor data to the server, the embodiment of the present invention further includes: preprocessing the sensor data to obtain characteristic information of the sensor data; and the sending the sensor data to the server includes: sending the characteristic information of the sensor data to the server. Specifically, before transmitting the sensor data to the server, the UE may preprocess the sensor data, for example, extract multiple time-domain and frequency-domain statistics of a time sequence of the sensor data, and send the characteristic information of the sensor data to the server, so that the server performs verification processing of an action verification code according to the characteristic information.

In the embodiment of the present invention, before transmitting the sensor data to the server, the UE may preprocess original data and transmit the extracted characteristic information to the server, thereby reducing data transmission traffic between the UE and the server and improving recognition precision of the server. Meanwhile, the preprocessing work is distributed onto the UE, thereby reducing the processing load of the server and improving efficiency of the verification code service.

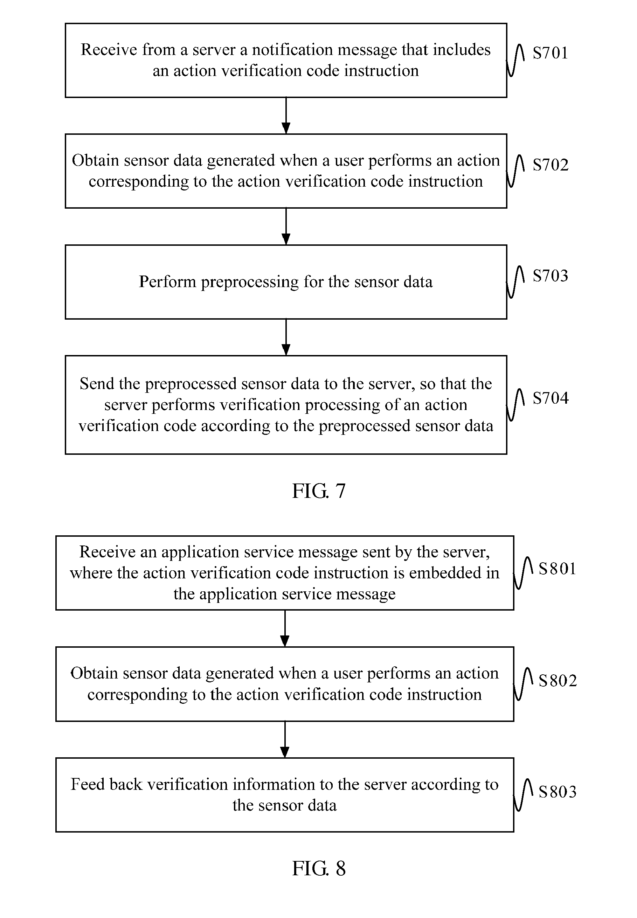

FIG. 7 is a flowchart of Embodiment 7 of a user verification method according to the present invention. As shown in FIG. 7, this embodiment describes a user verification method, assuming that the entity for performing the method is a user equipment. The user verification method in this embodiment includes:
Step S701: Receive from a server a notification message that includes an action verification code instruction.
Step S702: Obtain sensor data generated when a user performs an action corresponding to the action verification code instruction.
Step S703: Preprocess the sensor data.
Step S704: Send the preprocessed sensor data to the server, so that the server performs verification processing of an action verification code according to the preprocessed sensor data.
Step S701 and step S702 are similar to step S101 and step S102 in the embodiment shown in FIG. 1, which are not described again in this embodiment.

In a specific implementation process, based on the embodiment shown in FIG. 5, before the sending the sensor data to the server, the embodiment of the present invention further includes: preprocessing the sensor data; and the preprocessing includes at least one of the following types of processing: processing to reduce a sampling frequency of the sensor data;
processing to extract a time domain characteristic and/or a frequency characteristic of the sensor data within a unit time window; and processing to compress the sensor data.

Specifically, the UE may actively preprocess the sensor data, or receive a preprocessing instruction sent by the server and then preprocess the sensor data. A smartphone such as an Android mobile phone supports four sampling frequencies (5 HZ, 16 HZ, 50 HZ, and 100 HZ). By selecting the lowest sampling frequency that meets requirements, the amount of sensor data can be reduced effectively. Therefore, the amount of data transmitted from the UE to the server can be reduced by lowering the sampling frequency of the sensor data.

The original collected sensor data is preprocessed, and a time domain characteristic and/or a frequency characteristic in a unit time window is extracted, such as mean (mean), variance (variance), magnitude (magnitude), energy (energy), and entropy (entropy), and then the statistics in a continuous time sequence are transmitted. Compared with the transmission manner of the original collected sensor data, the manner of extracting the time domain characteristic and/or frequency characteristic in a unit time window can reduce the data transmission amount in magnitude.

The UE compresses the sensor data, which can reduce the amount of sensor data transmitted from the UE to the server. Experiments show that the sensor data can be compressed to less than 1/10 of the original size. After receiving the compressed sensor data, the server decompresses the sensor data and then determines the action verification code.

The three methods can be used separately or used together, and the most suitable data processing method may be selected by taking the recognition efficiency and the data transmission amount into account, which is not particularly limited in the embodiment of the present invention. When the UE transmits the sensor data to the server, an existing data encryption technology for secure transmission may be used to ensure that the UE's verification result information and sensor data are transmitted securely and will not be cracked or altered by hackers.

In the embodiment of the present invention, the sensor data obtained by the UE is preprocessed, and the preprocessed data is transmitted to the server, thereby slashing the data transmission amount and improving recognition efficiency for the action verification code and data communication efficiency.

FIG. 8 is a flowchart of Embodiment 8 of a user verification method according to the present invention. As shown in FIG. 8, this embodiment describes a user verification method, assuming that the entity for performing the method is a user equipment. The user verification method in this embodiment includes:

Step S801: Receive an application service message sent by the server, where the action verification code instruction is embedded in the application service message.

Step S802: Obtain sensor data generated when a user performs an action corresponding to the action verification code instruction.

Step S803: Feed back verification information to the server according to the sensor data.

In a specific implementation process, based on the embodiments shown in FIG. 1 to FIG. 7, the embodiment of the present invention can embed the verification code service into various applications, and an application service message sent by a server is received. An action verification code instruction is embedded in the application service message so that the verification code instruction is not necessarily delivered to the user explicitly for implementation. Inside the UE, a sensor equipped in the UE keeps detecting user movements such as whirling and fluttering when the user operates the UE. The UE captures corresponding sensor data, and performs verification processing of an action verification code for the sensor data to obtain verification result information indicating that the user is a human rather than a machine.

In the embodiment of the present invention, the verification code service is embedded in the application, an application service message sent by the server is received, and a transparent verification code mechanism is available to the user, thereby reducing user operations and bringing better user experience.

Preferably, in the embodiments shown in FIG. 1 to FIG. 7, the receiving from a server a notification message that includes an action verification code instruction includes: receiving a short message sent by the server, where the short message includes the action verification code instruction described by a text; or receiving a multimedia message sent by the server, where the multimedia message includes the action verification code instruction described by an image or animation; or receiving a voice prompt message sent by the server, where the voice prompt message includes voice prompt information of the action verification code instruction.

The action verification code instruction received by the user from the server may be in multiple forms, and may be selected according to actual needs. Specifically, when the UE is a smartphone, the server may notify the user through a short message, where the short message may include text description such as "Shake (Swipe)", "Shake left-right three times (Swipe left-right three times)", and "draw a circle (draw a circle)". The server may also notify the user through a multimedia message, where the multimedia message may include an action verification code instruction described by an image or animation. When the UE is a computer or the like, the server may notify the user through a text, an image, or even a voice, where the voice includes a specific action verification code instruction.

In the embodiment of the present invention, a notification message that includes an action verification code instruction is received from the server in multiple manners, so that the user can verify the action verification code in any circumstance, which improves practicality and convenience of the action verification code.

Preferably, in the embodiments shown in FIG. 1 to FIG. 7, the action verification code instruction includes at least one of the following instructions: an instruction for instructing the user to perform a gesture operation; an instruction for instructing the user to perform a body movement; and an instruction for instructing the user to perform a specific task operation.

Specifically, depending on different applications, different difficult may be set for the action specified in the action verification code instruction for the user to perform. For example, the user may be instructed to perform a gesture movement such as "shaking" and "circling", or may be instructed to perform a body movement such as "walking", "jogging", "whirling", and so on, or may be instructed to perform a specific task operation such as a combination of simple hand gesture movements and body movements, or an imaginary movement such as "a movement of drinking water", "a movement of making a call", and so on. Various forms of action verification code instructions provided in the embodiment of the present invention are not particularly limited in the embodiment of the present invention.

Through multiple action verification code instructions of different difficult, the embodiment of the present invention can meet needs of various groups of people, various occasions, and various applications, thereby improving applicability of the action verification code.

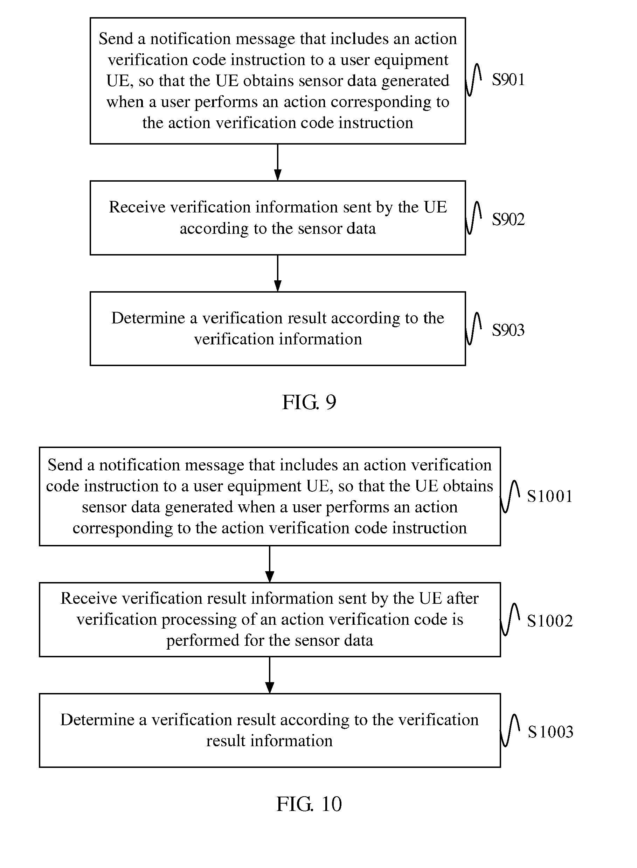

FIG. 9 is a flowchart of Embodiment 9 of a user verification method according to the present invention. As shown in FIG. 9, this embodiment describes a user verification method, assuming that the entity for performing the method is a server. The user verification method in this embodiment includes:

Step S901: Send a notification message that includes an action verification code instruction to a user equipment UE, so that the UE obtains sensor data generated when a user performs an action corresponding to the action verification code instruction.

When the user logs in to an online bank for shopping or browses content through a client such as a forum, the server sends a notification message that includes an action verification code instruction to the UE. The action verification code instruction may be an instruction for instructing the user to perform various specified actions, for example, instructing the user to hold the UE or a peripheral device of the UE to "shake", "draw a circle", "walk", and so on. The user performs the corresponding action according to the action verification code instruction. A sensor equipped in the user equipment can precisely recognize various simple user actions such as sitting, standing, walking, and running, and complicated actions such as making a call, and generate sensor data.

Step S902: Receive verification information, which is sent by the UE according to the sensor data.

The verification information received by the server from the UE may be in multiple forms, and specifically, may be verification result information of the action verification code instruction, or sensor data, or characteristic information of the sensor data obtained after the UE preprocesses the sensor data.

Step S903: Determine a verification result according to the verification information.

According to the form of the verification information sent by the UE, the server may determine a verification result, to allow or forbid the user to continue accessing the relevant website or forum.

In the embodiment of the present invention, the server sends a notification message that includes an action verification code instruction to the user equipment UE, so that the UE obtains sensor data generated when a user performs an action corresponding to the action verification code instruction, and the server receives verification information, which is sent by the UE according to the sensor data. The server determines a verification result according to the verification information, thereby recognizing human actions effectively, preventing a verification code cracker from using image processing in combination with pattern recognition to crack a verification code, distinguishing a human from a machine effectively, increasing difficulty of cracking the verification code, and improving security of the verification code.

FIG. 10 is a flowchart of Embodiment 10 of a user verification method according to the present invention. As shown in FIG. 10, this embodiment describes a user verification method, assuming that the entity for performing the method is a server. The user verification method in this embodiment includes:
Step S1001: Send a notification message that includes an action verification code instruction to a user equipment UE, so that the UE obtains sensor data generated when a user performs an action corresponding to the action verification code instruction.
Step S1002: Receive verification result information sent by the UE after verification processing of an action verification code is performed for the sensor data.
Step S1003: Determine a verification result according to the verification result information.
Step S1001 and step S1003 are similar to step S901 and step S903 in the embodiment shown in FIG. 9, which are not described again in this embodiment.

Based on the embodiment shown in FIG. 9, the receiving verification information, which is sent by the UE according to the sensor data in the embodiment of the present invention includes: receiving verification result information sent by the UE after verification processing of an action verification code is performed for the sensor data.

In step S1002, the UE may perform verification processing of an action verification code directly for the sensor data generated when the user performs a simple action corresponding to the action verification code instruction, determine whether the action performed by the user is consistent with the action specified in the action verification code instruction, and send verification result information to the server to indicate whether the action verification code is verified successfully. The server may directly receive the verification result information sent by the UE, and determine, according to the verification result information, whether the action verification code is verified successfully, to allow or forbid the user to continue accessing the relevant website or forum.

In this embodiment, the server receives a verification result sent by the UE after verification processing of an action verification code is performed for the sensor data, thereby providing convenience and efficiency and reducing the amount of data transmitted between the UE and the server. Meanwhile, the verification processing work is distributed onto the mobile phone, thereby reducing the processing load of the server and improving efficiency of the verification code service.

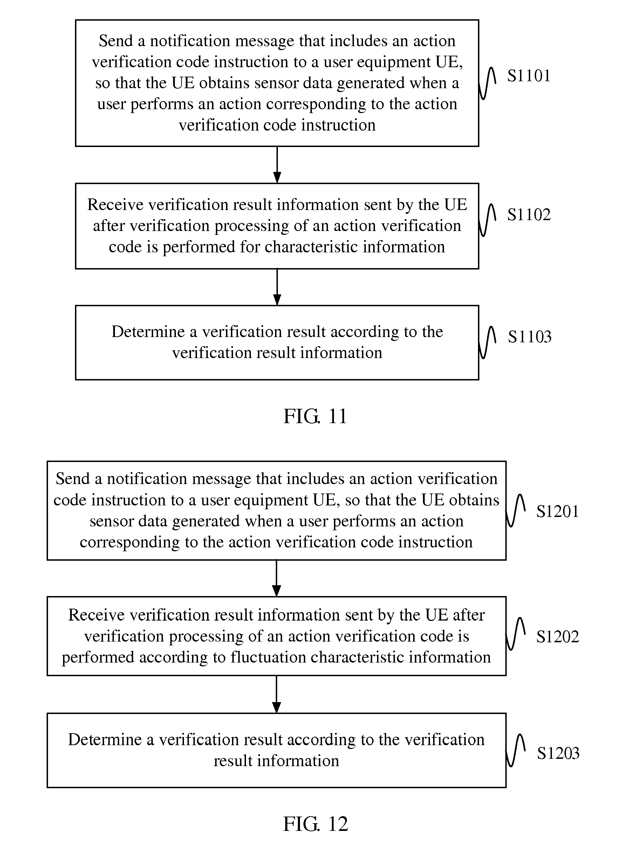

FIG. 11 is a flowchart of Embodiment 11 of a user verification method according to the present invention. As shown in FIG. 11, this embodiment describes a user verification method, assuming that the entity for performing the method is a server. The user verification method in this embodiment includes:
Step S1101: Send a notification message that includes an action verification code instruction to a user equipment UE, so that the UE obtains sensor data generated when a user performs an action corresponding to the action verification code instruction.
Step S1102: Receive verification result information sent by the UE after verification processing of an action verification code is performed for characteristic information.
Step S 1103: Determine a verification result according to the verification result information.
Step S1101 and step S1103 are similar to step S901 and step S903 in the embodiment shown in FIG. 9, which are not described again in this embodiment.

Based on the embodiment shown in FIG. 9, the receiving verification result information, which is sent by the UE according to the sensor data in the embodiment of the present invention includes: receiving verification result information sent by the UE after verification processing of an action verification code is performed for characteristic information, where the characteristic information is specifically characteristic information of the sensor data obtained after the UE preprocesses the sensor data.

The UE may preprocess the obtained sensor data, and extract the characteristic information of the sensor data, for example, extract characteristic information of various time-domain and frequency-domain statistics of the sensor data. The UE performs verification processing of an action verification code according to the characteristic information, determines whether the action performed by the user is consistent with the action specified in the action verification code instruction, and sends verification result information indicating verification success or failure to the server directly. The server receives the verification result information obtained after the verification processing, determines a verification result of verification success or failure, to allow or forbid the user to continue accessing the relevant website or forum.

In this embodiment, the server receives a verification result sent by the UE after verification processing of an action verification code is performed for the characteristic information, thereby providing convenience and efficiency, improving precision and accuracy of the verification processing of the verification code, and reducing the amount of data transmitted between the UE and the server. Meanwhile, the verification processing work is distributed onto the mobile phone, thereby reducing the processing load of the server and improving efficiency of the verification code service.

FIG. 12 is a flowchart of Embodiment 12 of a user verification method according to the present invention. As shown in FIG. 12, this embodiment describes a user verification method, assuming that the entity for performing the method is a server. The user verification method in this embodiment includes:
Step S1201: Send a notification message that includes an action verification code instruction to a user equipment UE, so that the UE obtains sensor data generated when a user performs an action corresponding to the action verification code instruction.
Step S1202: Receive verification result information sent by the UE after verification processing of an action verification code is performed according to fluctuation characteristic information.
Step S1203: Determine a verification result according to the verification result information.
Step S1201 is similar to step S901 in the embodiment shown in FIG. 9, which is not described again in this embodiment.

Based on the embodiment shown in FIG. 11, the receiving verification information sent by the UE after verification processing of an action verification code is performed for characteristic information in the embodiment of the present invention includes: receiving verification result information sent by the UE after the verification processing of the action verification code is performed according to fluctuation characteristic information, where the verification success result information includes: verification result information indicating verification success when a fluctuation value in the fluctuation characteristic information in the sensor data is greater than a preset threshold.

Specifically, the UE preprocesses the sensor data, extracts fluctuation characteristic information of three-dimensional data in the sensor data in a time period, and performs comparative verification processing for a fluctuation value and a preset threshold. If the fluctuation value is greater than the preset threshold, the server receives the verification success result information sent by the UE, determines that the verification succeeds, and allows the user to continue accessing the relevant website or forum; if the fluctuation value is less than the preset threshold, the server receives the verification failure result information sent by the UE, determines that the verification fails, and forbids the user to continue accessing the relevant website or forum.

In the embodiment of the present invention, the server receives verification result information sent by the UE after verification processing of an action verification code is performed according to fluctuation characteristic information, which is easy to implement and reduces the amount of data transmitted between the UE and the server. Meanwhile, the verification processing work is distributed onto the mobile phone, thereby reducing the processing load of the server and improving efficiency of the verification code service.

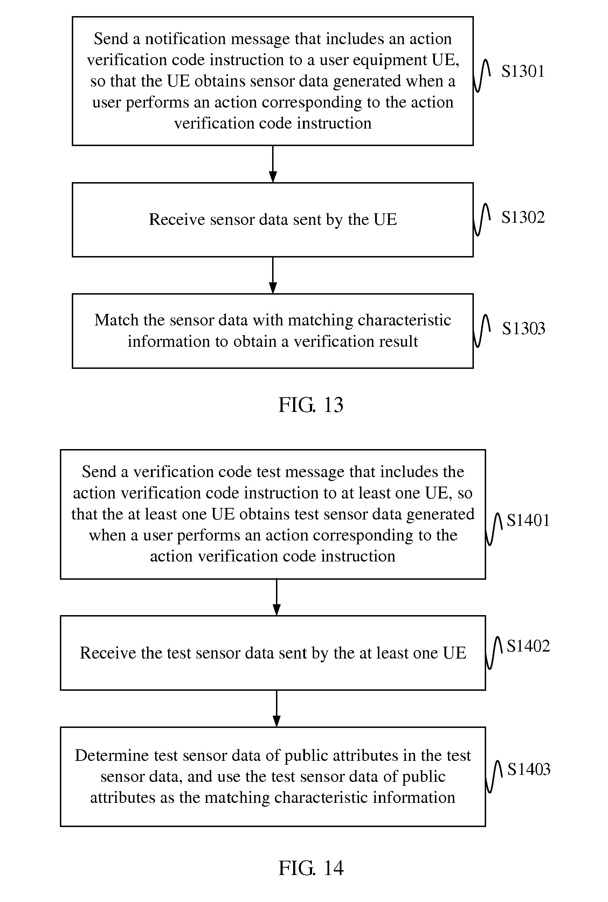

FIG. 13 is a flowchart of Embodiment 13 of a user verification method according to the present invention. As shown in FIG. 13, this embodiment describes a user verification method, assuming that the entity for performing the method is a server. The user verification method in this embodiment includes:
Step S1301: Send a notification message that includes an action verification code instruction to a user equipment UE, so that the UE obtains sensor data generated when a user performs an action corresponding to the action verification code instruction.
Step S 1302: Receive sensor data sent by the UE.
Step S1303: Match the sensor data with matching characteristic information to obtain a verification result.
Step S1201 is similar to step S901 in the embodiment shown in FIG. 9, which is not described again in this embodiment.

Based on the embodiment shown in FIG. 9, the receiving verification information, which is sent by the UE according to the sensor data in the embodiment of the present invention includes: receiving sensor data sent by the UE; and the determining a verification result according to the verification information includes: matching the sensor data with matching characteristic information to obtain a verification result.

Specifically, for each action verification code instruction sent by the server to the UE, the server stores corresponding matching characteristic information, which can distinguish the action verification code instruction from other action verification code instructions effectively. The sensor data received by the server from the UE may be the sensor data obtained by the UE directly, or characteristic information of the sensor data obtained after the UE performs preprocessing. The server may match the sensor data or the characteristic information of the sensor data with the matching characteristic information to obtain a verification result, to allow or forbid the UE to access the corresponding website or forum.

In the embodiment of the present invention, the server matches the sensor data with the matching characteristic information to obtain a verification result, which can recognize human actions effectively, prevent a verification code cracker from using image processing in combination with pattern recognition to crack a verification code, distinguish a human from a machine effectively, increase difficulty of cracking the verification code, and improve security of the verification code.

FIG. 14 is a flowchart of Embodiment 14 of a user verification method according to the present invention. As shown in FIG. 14, this embodiment describes a user verification method, assuming that the entity for performing the method is a server. Based on the embodiment shown in FIG. 13, before the server matches the sensor data with the matching characteristic information, the user verification method in this embodiment further includes:
Step S1401: Send a verification code test message that includes the action verification code instruction to at least one UE, so that the at least one UE obtains test sensor data generated when a user performs an action corresponding to the action verification code instruction.
Step S 1402: Receive the test sensor data sent by the at least one UE.
Step S1403: Determine test sensor data of a public attribute in the test sensor data, and use the test sensor data of the public attribute as the matching characteristic information.

To match the sensor data with the matching characteristic information, plenty of matching characteristic information is required. When different persons execute the same action verification code instruction, the sensor data differs. Therefore, to accomplish enough discrimination, persons or groups of people involved in an experiment should be as many as possible, so as to obtain the matching characteristic information.

The server sends the same action verification code instruction to multiple users. After receiving the action verification code instruction, each user performs the corresponding action according to "respective understanding", and the UE sends the corresponding sensor data to the server. When a majority of users perform the verification code action correctly, it is determined that the sensor data generated when the majority of users perform the verification code action correctly is the test sensor data of the public attribute, and the test sensor data of the public attribute is used as the matching characteristic information. This method may be called a "voting mechanism". Meanwhile, the server determines that the majority of users are verified successfully.

The "voting mechanism" method for determining the test sensor data of the public attribute may be implemented through algorithms such as outlier detection, clustering algorithm, sorting algorithm, and machine learning algorithm, which is not particularly limited in the embodiment of the present invention.

In the embodiment of the present invention, test sensor data of a public attribute in the test sensor data is determined, and the test sensor data of the public attribute is used as the matching characteristic information. Therefore, plenty of matching characteristic information for the server to determine a verification result, and improve the accuracy and the response speed of the action verification code instruction.

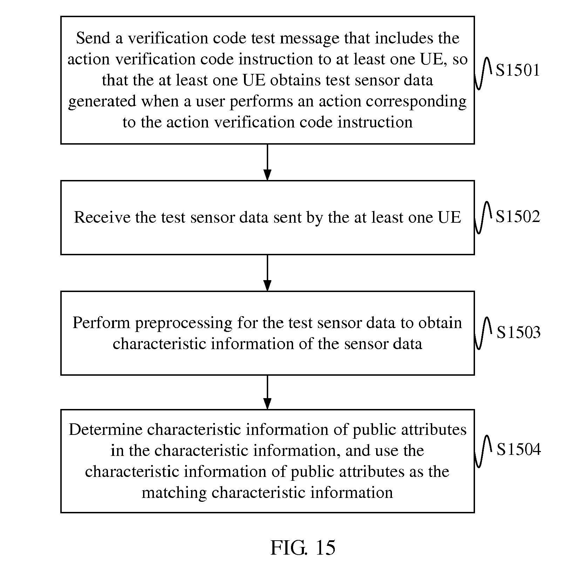

FIG. 15 is a flowchart of Embodiment 15 of a user verification method according to the present invention. As shown in FIG. 15, this embodiment describes a user verification method, assuming that the entity for performing the method is a server. The user verification method in this embodiment includes:
Step S1501: Send a verification code test message that includes the action verification code instruction to at least one UE, so that the at least one UE obtains test sensor data generated when a user performs an action corresponding to the action verification code instruction.
Step S 1502: Receive the test sensor data sent by the at least one UE.
Step S1503: Preprocess the test sensor data to obtain characteristic information of the sensor data.
Step S1504: Determine characteristic information of a public attribute in the characteristic information, and use the characteristic information of a public attribute as the matching characteristic information.
Step S1501 and step S1502 are similar to step S1401 and step S1402 in the embodiment shown in FIG. 14, which are not described again in this embodiment.

Based on the embodiment shown in FIG. 14, before the determining test sensor data of a public attribute in the test sensor data, the embodiment of the present invention further includes: preprocessing the test sensor data to obtain characteristic information of the sensor data; and the determining test sensor data of a public attribute in the test sensor data, and using the test sensor data of the public attribute as the matching characteristic information, include: determining characteristic information of a public attribute in the characteristic information, and using the characteristic information of a public attribute as the matching characteristic information.

In a specific implementation process, the test sensor data may be preprocessed first to obtain characteristic information of the sensor data; or, the characteristic information of the sensor data sent by the UE is received, and then the characteristic information of a public attribute in the characteristic information is determined, and the characteristic information of a public attribute is used as the matching characteristic information.

In the embodiment of the present invention, the characteristic information of a public attribute in the characteristic information is determined, and the characteristic information of a public attribute is used as the matching characteristic information; and a real characteristic of the action is extracted, and the characteristic information of the sensor data is obtained. Therefore, human actions and behaviors can be captured more accurately, user actions and behaviors can be distinguished more accurately, plenty of matching characteristic information is provided for the server to determine a verification result, and the accuracy and the response speed of the action verification code instruction are improved.

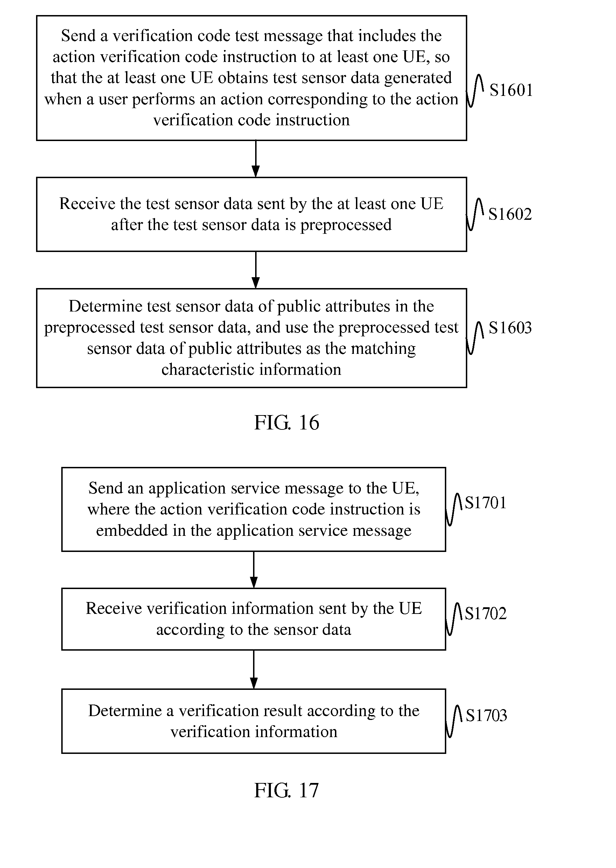

FIG. 16 is a flowchart of Embodiment 16 of a user verification method according to the present invention. As shown in FIG. 16, this embodiment describes a user verification method, assuming that the entity for performing the method is a server. The user verification method in this embodiment includes:
Step S1601: Send a verification code test message that includes the action verification code instruction to at least one UE, so that the at least one UE obtains test sensor data generated when a user performs an action corresponding to the action verification code instruction.
Step S1602: Receive the test sensor data sent by the at least one UE after the test sensor data is preprocessed.
Step S 1603: Determine test sensor data of a public attribute in the preprocessed test sensor data, and use the preprocessed test sensor data of a public attribute as the matching characteristic information.

In a specific implementation process, the UE may actively preprocess the sensor data, or receive a preprocessing instruction sent by the server and then preprocess the sensor data. A smartphone such as an Android mobile phone supports four sampling frequencies (5 HZ, 16 HZ, 50 HZ, and 100 HZ). By selecting the lowest sampling frequency that meets requirements, the amount of sensor data can be reduced effectively. Therefore, the amount of data transmitted from the UE to the server can be reduced by lowering the sampling frequency of the sensor data.

The original collected sensor data is preprocessed, and a time domain characteristic and/or a frequency characteristic in a unit time window is extracted, such as mean (mean), variance (variance), magnitude (magnitude), energy (energy), and entropy (entropy), and then the statistics in a continuous time sequence are transmitted. Compared with the transmission manner of the original collected sensor data, the manner of extracting the time domain characteristic and/or frequency characteristic in a unit time window can reduce the data transmission amount in magnitude.

The UE compresses the sensor data, which can reduce the amount of sensor data transmitted from the UE to the server. Experiments show that the sensor data can be compressed to less than 1/10 of the original size. After receiving the compressed sensor data, the server decompresses the sensor data and then determines the action verification code.

The server receives the test sensor data sent by the UE after the test sensor data is preprocessed, determines the test sensor data of the public attribute in the preprocessed test sensor data, and uses the preprocessed test sensor data of a public attribute as the matching characteristic information.

In the embodiment of the present invention, the server receives preprocessed sensor data sent by the UE, determines the test sensor data of the public attribute in the preprocessed test sensor data, and uses the preprocessed test sensor data of a public attribute as the matching characteristic information. Therefore, human actions and behaviors can be captured more accurately, user actions and behaviors can be distinguished more accurately, the accuracy and the response speed of the action verification code technology are improved, and the amount of data transmitted between the UE and the server is reduced. Meanwhile, the sensor data preprocessing work is distributed onto the mobile phone, thereby reducing the processing load of the server and improving efficiency of the verification code service.

FIG. 17 is a flowchart of Embodiment 17 of a user verification method according to the present invention. As shown in FIG. 17, this embodiment describes a user verification method, assuming that the entity for performing the method is a server. The user verification method in this embodiment includes:
Step S1701: Send an application service message to the UE, where the action verification code instruction is embedded in the application service message.
Step S1702: Receive verification information, which is sent by the UE according to the sensor data.
Step S 1703: Determine a verification result according to the verification information.

In a specific implementation process, based on the embodiments shown in FIG. 9 to FIG. 16, the embodiment of the present invention can embed the verification code service into an application, and the server sends an application service message to the UE. An action verification code instruction is embedded in the application service message so that the verification code instruction is not necessarily delivered to the user explicitly for implementation. A sensor equipped in the UE keeps performing automatic detection to detect that the user is a human rather than a machine.

In the embodiment of the present invention, the server sends an application service message to the UE, where a verification code service is embedded in the application. Therefore, a transparent verification code mechanism is available to the user, user operations are reduced, and user experience is better.

Preferably, based on the embodiments shown in FIG. 9 to FIG. 16, the sending a notification message that includes an action verification code instruction to a user equipment UE includes: sending a short message to the UE, where the short message includes the action verification code instruction described by a text; or sending a multimedia message to the UE, where the multimedia message includes the action verification code instruction described by an image or animation; or sending a voice prompt message to the UE, where the voice prompt message includes voice prompt information of the action verification code instruction.

In a specific implementation process, the action verification code instruction generated by the server may be in multiple forms. For example, one action verification code instruction may be selected randomly from an action verification code instruction library; multiple action verification code instructions may be combined randomly; different parameters may be selected to generate an action verification code instruction according to parameters of the action verification code instruction. For example, parameters of a "shake" action include a strength and the number of times, and accordingly the generated actions include "shake hard three times" or "shake gently five times". The form of the action verification code instruction generated by the server is not particularly limited in the embodiment of the present invention.

The server may send the generated action verification code to the UE in multiple forms. The server may notify the user through a short message, where the short message may include text description such as "Shake (Swipe)", "Shake left-right three times (Swipe left-right three times)", and "draw a circle (draw a circle)". The server may also notify the user through a multimedia message, where the multimedia message may include an action verification code instruction described by an image or animation. The server may also notify the user through a voice, where the voice includes a specific action verification code instruction.

In the embodiment of the present invention, the server sends a notification message that includes an action verification code instruction to the UE in multiple forms, so that the user can verify the verification code in any circumstance, which improves practicality and convenience of the verification code.

Preferably, based on the embodiments shown in FIG. 9 to FIG. 16, the action verification code instruction includes at least one of the following instructions: an instruction for instructing the user to perform a gesture operation; an instruction for instructing the user to perform a body movement; and an instruction for instructing the user to perform a specific task operation.

Through multiple action verification code instructions of different difficult, the embodiment of the present invention can meet needs of various occasions and various applications, thereby improving applicability of the action verification code.

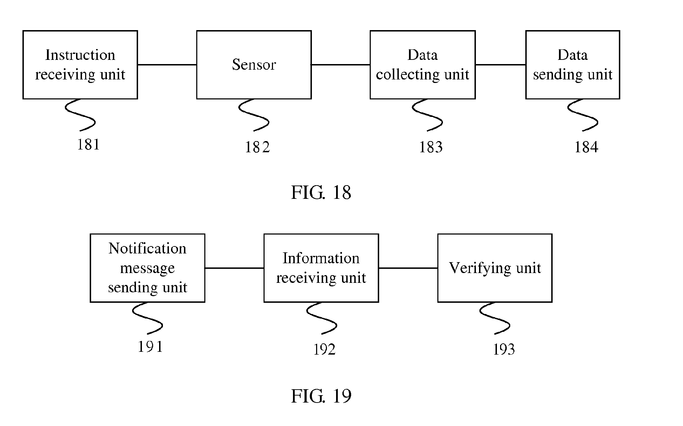

FIG. 18 is a schematic structural diagram of Embodiment 1 of a user equipment according to the present invention. As shown in FIG. 18, the user equipment provided in the embodiment of the present invention includes an instruction receiving unit 181, a sensor 182, a data collecting unit 183, and a data sending unit 184. The instruction receiving unit 181 is configured to receive from a server a notification message that includes an action verification code instruction; the sensor 182 is configured to generate sensor data according to an action corresponding to the action verification code instruction and performed by a user; the data collecting unit 183 is configured to obtain the sensor data; and the data sending unit 184 is configured to feed back verification information to the server according to the sensor data.

The user equipment in this embodiment may be used to implement the technical solution of the method embodiment shown in FIG. 1. The implementation principles and technical effects of the user equipment are similar to those of the method embodiment, which are not described herein again.

Optionally, the data sending unit 184 is specifically configured to: perform verification processing of an action verification code for the sensor data, and send verification result information to the server.

The user equipment in this embodiment may be used to implement the technical solution of the method embodiment shown in FIG. 2. The implementation principles and technical effects of the user equipment are similar to those of the method embodiment, which are not described herein again.

Optionally, the data sending unit 184 is specifically configured to: preprocess the sensor data to obtain characteristic information of the sensor data; and perform the verification processing of the action verification code according to the characteristic information, and send verification result information to the server.

The user equipment in this embodiment may be used to implement the technical solution of the method embodiment shown in FIG. 3. The implementation principles and technical effects of the user equipment are similar to those of the method embodiment, which are not described herein again.

Optionally, the data sending unit 184 is specifically configured to: extract fluctuation characteristic information of the sensor data; perform comparative verification processing for a fluctuation value in the fluctuation characteristic information and a preset threshold; and, if the fluctuation value is greater than the preset threshold, send verification result information indicative of verification success to the server.

The user equipment in this embodiment may be used to implement the technical solution of the method embodiment shown in FIG. 4. The implementation principles and technical effects of the user equipment are similar to those of the method embodiment, which are not described herein again.

Optionally, the data sending unit 184 is specifically configured to: send the sensor data to the server, so that the server performs verification processing of an action verification code according to the sensor data.

The user equipment in this embodiment may be used to implement the technical solution of the method embodiment shown in FIG. 5. The implementation principles and technical effects of the user equipment are similar to those of the method embodiment, which are not described herein again.

Optionally, the data sending unit 184 is specifically configured to: preprocess the sensor data to obtain characteristic information of the sensor data; and send the characteristic information of the sensor data to the server, so that the server performs the verification processing of the action verification code according to the characteristic information.

The user equipment in this embodiment may be used to implement the technical solution of the method embodiment shown in FIG. 6. The implementation principles and technical effects of the user equipment are similar to those of the method embodiment, which are not described herein again.

Optionally, the data sending unit 184 is specifically configured to preprocess the sensor data, and send the preprocessed sensor data to the server.

The preprocessing includes at least one of the following types of processing:
processing to reduce a sampling frequency of the sensor data;
processing to extract a time domain characteristic and/or a frequency characteristic of the sensor data within a unit time window; and
processing to compress the sensor data;

The user equipment in this embodiment may be used to implement the technical solution of the method embodiment shown in FIG. 7. The implementation principles and technical effects of the user equipment are similar to those of the method embodiment, which are not described herein again.

Optionally, the instruction receiving unit 181 is specifically configured to receive an application service message sent by the server, where the action verification code instruction is embedded in the application service message.

The user equipment in this embodiment may be used to implement the technical solution of the method embodiment shown in FIG. 8. The implementation principles and technical effects of the user equipment are similar to those of the method embodiment, which are not described herein again.

Optionally, the instruction receiving unit 181 in the foregoing embodiment is specifically configured to: receive a short message sent by the server, where the short message includes the action verification code instruction described by a text; or
receive a multimedia message sent by the server, where the multimedia message includes the action verification code instruction described by an image or animation; or
receive a voice prompt message sent by the server, where the voice prompt message includes voice prompt information of the action verification code instruction.

In the embodiment of the present invention, a notification message that includes an action verification code instruction is received from the server by the instruction receiving unit in multiple manners, so that the user can verify the action verification code in any circumstance, which improves practicality and convenience of the action verification code.

Optionally, the action verification code instruction in the foregoing embodiment includes at least one of the following instructions:
an instruction for instructing the user to perform a gesture operation;
an instruction for instructing the user to perform a body movement; and
an instruction for instructing the user to perform a specific task operation.

Through multiple action verification code instructions of different difficult, the embodiment of the present invention can meet needs of various groups of people, various occasions, and various applications, thereby improving applicability of the action verification code.

FIG. 19 is a schematic structural diagram of Embodiment 1 of a server according to the present invention. As shown in FIG. 19, the server provided in the embodiment of the present invention includes a notification message sending unit 191, an information receiving unit 192, and a verifying unit 193. The notification message sending unit 191 is configured to send a notification message that includes an action verification code instruction to a user equipment UE, so that the UE obtains sensor data generated when a user performs an action corresponding to the action verification code instruction; the information receiving unit 192 is configured to receive verification information, which is sent by the UE according to the sensor data; and the verifying unit 193 is configured to determine a verification result according to the verification information.

The server in this embodiment may be used to implement the technical solution of the method embodiment shown in FIG. 9. The implementation principles and technical effects of the server are similar to those of the method embodiment, which are not described herein again.

Optionally, the information receiving unit 192 is specifically configured to receive verification result information sent by the UE after verification processing of an action verification code is performed for the sensor data.

The server in this embodiment may be used to implement the technical solution of the method embodiment shown in FIG. 10. The implementation principles and technical effects of the server are similar to those of the method embodiment, which are not described herein again.

Optionally, the information receiving unit 192 is specifically configured to receive verification result information sent by the UE after verification processing of an action verification code is performed for the characteristic information.

The characteristic information is characteristic information obtained after the UE preprocesses the sensor data.

The server in this embodiment may be used to implement the technical solution of the method embodiment shown in FIG. 11. The implementation principles and technical effects of the server are similar to those of the method embodiment, which are not described herein again.

Optionally, the information receiving unit 192 is specifically configured to receive verification result information sent by the UE after verification processing of an action verification code is performed according to fluctuation characteristic information.

The verification result information after the verification processing includes: verification result information indicating verification success when a fluctuation value in the fluctuation characteristic information in the sensor data is greater than a preset threshold.

The server in this embodiment may be used to implement the technical solution of the method embodiment shown in FIG. 12. The implementation principles and technical effects of the server are similar to those of the method embodiment, which are not described herein again.

Optionally, the information receiving unit 192 is specifically configured to receive the sensor data sent by the UE.

The verifying unit 193 is specifically configured to match the sensor data with matching characteristic information to obtain a verification result.

The server in this embodiment may be used to implement the technical solution of the method embodiment shown in FIG. 13. The implementation principles and technical effects of the server are similar to those of the method embodiment, which are not described herein again.

Optionally, the notification message sending unit 191 is specifically configured to send a verification code test message that includes the action verification code instruction to at least one UE, so that the at least one UE obtains test sensor data generated when a user performs an action corresponding to the action verification code instruction;
the information receiving unit 192 is specifically configured to receive the test sensor data sent by the at least one UE; and
the verifying unit 193 is specifically configured to determine test sensor data of a public attribute in the test sensor data, and use the test sensor data of the public attribute as the matching characteristic information.

The server in this embodiment may be used to implement the technical solution of the method embodiment shown in FIG. 14. The implementation principles and technical effects of the server are similar to those of the method embodiment, which are not described herein again.

Optionally, the verifying unit 193 is specifically configured to: preprocess the test sensor data to obtain characteristic information of the sensor data; and determine characteristic information of a public attribute in the characteristic information, and use the characteristic information of a public attribute as the matching characteristic information.

The server in this embodiment may be used to implement the technical solution of the method embodiment shown in FIG. 15. The implementation principles and technical effects of the server are similar to those of the method embodiment, which are not described herein again.

Optionally, the notification message sending unit 191 is specifically configured to send a verification code test message that includes the action verification code instruction to at least one UE, so that the at least one UE obtains test sensor data generated when a user performs an action corresponding to the action verification code instruction;
the information receiving unit 192 is specifically configured to receive the test sensor data sent by the at least one UE after the test sensor data is preprocessed; and
the verifying unit 193 is specifically configured to determine test sensor data of a public attribute in the preprocessed test sensor data, and use the preprocessed test sensor data of a public attribute as the matching characteristic information.

The server in this embodiment may be used to implement the technical solution of the method embodiment shown in FIG. 16. The implementation principles and technical effects of the server are similar to those of the method embodiment, which are not described herein again.

Optionally, the notification message sending unit 191 is specifically configured to send an application service message to the UE, where the action verification code instruction is embedded in the application service message.

The server in this embodiment may be used to implement the technical solution of the method embodiment shown in FIG. 17. The implementation principles and technical effects of the server are similar to those of the method embodiment, which are not described herein again.

Optionally, the notification message sending unit 191 is specifically configured to: send a short message to the UE, where the short message includes the action verification code instruction described by a text; or
send a multimedia message to the UE, where the multimedia message includes the action verification code instruction described by an image or animation; or
send a voice prompt message to the UE, where the voice prompt message includes voice prompt information of the action verification code instruction.

In the embodiment of the present invention, the server sends a notification message that includes an action verification code instruction to the UE in multiple forms, so that the user can verify the verification code in any circumstance, which improves practicality and convenience of the verification code.

Optionally, the action verification code instruction includes at least one of the following instructions:
an instruction for instructing the user to perform a gesture operation; an instruction for instructing the user to perform a body movement; and an instruction for instructing the user to perform a specific task operation.

Through multiple action verification code instructions of different difficult, the embodiment of the present invention can meet needs of various occasions and various applications, thereby improving applicability of the action verification code.

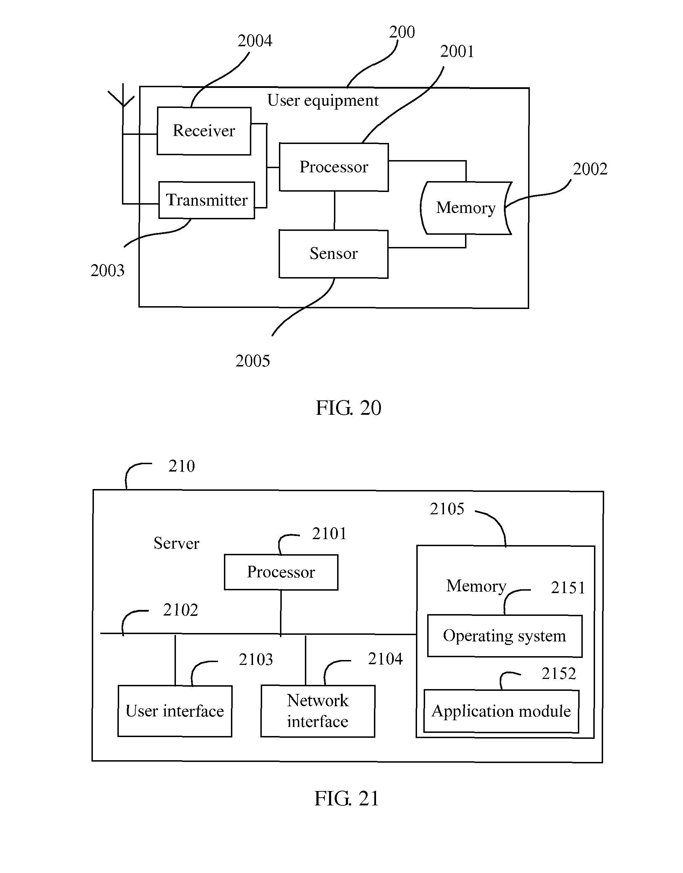

FIG. 20 is a schematic structural diagram of Embodiment 2 of a user equipment according to the present invention. As shown in FIG. 20, the user equipment 200 provided in this embodiment includes a processor 2001, a memory 2002, and a sensor 2005. The user equipment 200 may further include a transmitter 2003 and a receiver 2004. The transmitter 2003 and the receiver 2004 may be connected to the processor 2001. The memory 2002 stores executable instructions. When the user equipment 200 runs, communication is implemented between the processor 2001, the sensor 2005, and the memory 2002; the processor 2001 invokes an executable instruction in the memory 2002 and obtains sensor data; meanwhile, the processor 2001 and the sensor 2005 invoke the executable instruction in the memory 2002 to execute the embodiments of the user verification processing method. The implementation principles and technical effects are similar, which are not described herein again.

FIG. 21 is a schematic structural diagram of Embodiment 2 of a server according to the present invention. As shown in FIG. 21, the server 210 includes at least one processor 2101 such as a CPU, at least one network interface 2104 or another user interface 2103, a memory 2105, and at least one communication bus 2102. The communication bus 2102 is configured to implement connection and communication between such components. The server 210 optionally includes a user interface 2103, a display, a keyboard, and a click device (such as a mouse, trackball (trackball), touchpad, or touchscreen). The memory 2105 may include a high-speed RAM memory or a non-volatile memory (non-volatile memory), for example, at least one disk storage. The memory 2105 may optionally include at least one storage device away from the processor 2101.

In some implementation manners, the memory 2105 stores the following elements, executable modules or data structures, or their subsets, or their extension sets:
an operating system 2151, which includes various system programs and is configured to implement various basic services and process hardware-based tasks; and
an application module 2152, which includes various application programs and is configured to implement various application services.

The application module 2152 includes, but is not limited to, a notification message sending unit 191, an information receiving unit 192, and a verifying unit 193.

The specific implementation of each module in the application module 2152 is not described herein. For details, refer to the corresponding module in the embodiment shown in FIG. 19.

When the server 210 runs, the processor 2101 communicates with the memory 2105, and the processor 2105 executes an instruction to enable the server 210 to perform the user verification processing method in the method embodiments. The implementation principles and technical effects are similar, which are not described herein again.

Persons of ordinary skill in the art may understand that, all or a part of the steps in each of the foregoing method embodiments may be implemented by a program instructing relevant hardware. The aforementioned program may be stored in a computer readable storage medium. When the program runs, the steps of the forgoing method embodiments are performed. The foregoing storage medium includes any medium capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of the corresponding technical solutions to depart from the scope of the technical solutions of the embodiments of the present invention.

## Claims

1. A user verification processing method, comprising:
receiving from a server a notification message that comprises an action verification code instruction;
obtaining sensor data generated when a user performs an action corresponding to the action verification code instruction; and
feeding back verification information to the server according to the sensor data.

2. The method according to claim 1, wherein the feeding back verification information to the server according to the sensor data comprises:
performing verification processing of an action verification code for the sensor data, and sending verification result information to the server.

3. The method according to claim 2, wherein: before the performing verification processing of an action verification code for the sensor data, the method further comprises:
preprocessing the sensor data to obtain characteristic information of the sensor data; and
the performing verification processing of an action verification code for the sensor data comprises:
performing the verification processing of the action verification code according to the characteristic information.

4. The method according to claim 3, wherein: the preprocessing the sensor data to obtain characteristic information of the sensor data comprises:
extracting fluctuation characteristic information of the sensor data;
the performing the verification processing of the action verification code according to the characteristic information comprises:
performing comparative verification processing for a fluctuation value in the fluctuation characteristic information and a preset threshold; and
the sending verification result information to the server comprises:
if the fluctuation value is greater than the preset threshold, sending verification result information indicative of verification success to the server.

5. The method according to claim 1, wherein the feeding back verification information to the server according to the sensor data comprises:
sending the sensor data to the server, so that the server performs verification processing of an action verification code according to the sensor data.

6. The method according to claim 5, wherein: before the sending the sensor data to the server, the method further comprises:
preprocessing the sensor data to obtain characteristic information of the sensor data; and
the sending the sensor data to the server comprises:
sending the characteristic information of the sensor data to the server, so that the server performs the verification processing of the action verification code according to the characteristic information.

7. The method according to claim 5, wherein: before the sending the sensor data to the server, the method further comprises:
preprocessing the sensor data, wherein the preprocessing comprises at least one of the following types of processing:
processing to reduce a sampling frequency of the sensor data;
processing to extract a time domain characteristic and/or a frequency characteristic of the sensor data within a unit time window; and
processing to compress the sensor data; and
the sending the sensor data to the server comprises:
sending the preprocessed sensor data to the server.

8. The method according to any one of claims 1 to 7, wherein the receiving from a server a notification message that comprises an action verification code instruction comprises:
receiving an application service message sent by the server, wherein the action verification code instruction is embedded in the application service message.

9. The method according to any one of claims 1 to 7, wherein the receiving from a server a notification message that comprises an action verification code instruction comprises:
receiving a short message sent by the server, wherein the short message comprises the action verification code instruction described by a text; or
receiving a multimedia message sent by the server, wherein the multimedia message comprises the action verification code instruction described by an image or animation; or
receiving a voice prompt message sent by the server, wherein the voice prompt message comprises voice prompt information of the action verification code instruction.

10. The method according to any one of claims 1 to 7, wherein the action verification code instruction comprises at least one of the following instructions:
an instruction for instructing the user to perform a gesture operation;
an instruction for instructing the user to perform a body movement; and
an instruction for instructing the user to perform a specific task operation.

11. A user verification processing method, comprising:
sending a notification message that comprises an action verification code instruction to a user equipment UE, so that the UE obtains sensor data generated when a user performs an action corresponding to the action verification code instruction;
receiving verification information, which is sent by the UE according to the sensor data; and
determining a verification result according to the verification information.

12. The method according to claim 11, wherein the receiving verification information, which is sent by the UE according to the sensor data comprises:
receiving verification result information sent by the UE after verification processing of an action verification code is performed for the sensor data.

13. The method according to claim 11, wherein the receiving verification information, which is sent by the UE according to the sensor data comprises:
receiving verification result information sent by the UE after verification processing of an action verification code is performed for characteristic information, wherein
the characteristic information is characteristic information obtained after the UE preprocesses the sensor data.

14. The method according to claim 13, wherein the receiving verification result information sent by the UE after verification processing of an action verification code is performed for characteristic information comprises:
receiving verification result information sent by the UE after the verification processing of the action verification code is performed according to fluctuation characteristic information, wherein
the verification result information after the verification processing comprises: verification result information indicating verification success when a fluctuation value in the fluctuation characteristic information in the sensor data is greater than a preset threshold.

15. The method according to claim 11, wherein the receiving verification information, which is sent by the UE according to the sensor data comprises:
receiving the sensor data sent by the UE; and
the determining a verification result according to the verification information comprises:
matching the sensor data with matching characteristic information to obtain a verification result.

16. The method according to claim 15, wherein before the matching the sensor data with matching characteristic information, the method further comprises:
sending a verification code test message that comprises the action verification code instruction to at least one UE, so that the at least one UE obtains test sensor data generated when a user performs an action corresponding to the action verification code instruction;
receiving the test sensor data sent by the at least one UE; and
determining test sensor data of a public attribute in the test sensor data, and using the test sensor data of the public attribute as the matching characteristic information.

17. The method according to claim 16, wherein: before the determining test sensor data of a public attribute in the test sensor data, the method further comprises:
preprocessing the test sensor data to obtain characteristic information of the sensor data; and
the determining test sensor data of a public attribute in the test sensor data, and using the test sensor data of the public attribute as the matching characteristic information, comprise:
determining characteristic information of a public attribute in the characteristic information, and using the characteristic information of a public attribute as the matching characteristic information.

18. The method according to claim 15, wherein before the matching the sensor data with matching characteristic information, the method further comprises:
sending a verification code test message that comprises the action verification code instruction to at least one UE, so that the at least one UE obtains test sensor data generated when a user performs an action corresponding to the action verification code instruction;
receiving the test sensor data sent by the at least one UE after the test sensor data is preprocessed; and
determining test sensor data of a public attribute in the preprocessed test sensor data, and using the preprocessed test sensor data of a public attribute as the matching characteristic information.

19. The method according to any one of claims 11 to 18, wherein the sending a notification message that comprises an action verification code instruction to a user equipment UE comprises:
sending an application service message to the UE, wherein the action verification code instruction is embedded in the application service message.

20. The method according to any one of claims 11 to 18, wherein the sending a notification message that comprises an action verification code instruction to a user equipment UE comprises:
sending a short message to the UE, wherein the short message comprises the action verification code instruction described by a text; or
sending a multimedia message to the UE, wherein the multimedia message comprises the action verification code instruction described by an image or animation; or
sending a voice prompt message to the UE, wherein the voice prompt message comprises voice prompt information of the action verification code instruction.

21. The method according to any one of claims 11 to 18, wherein the action verification code instruction comprises at least one of the following instructions:
an instruction for instructing the user to perform a gesture operation;
an instruction for instructing the user to perform a body movement; and
an instruction for instructing the user to perform a specific task operation.

22. A user equipment, comprising:
an instruction receiving unit, configured to receive from a server a notification message that comprises an action verification code instruction;
a sensor, configured to generate sensor data according to an action corresponding to the action verification code instruction and performed by a user;
a data collecting unit, configured to obtain the sensor data; and
a data sending unit, configured to feed back verification information to the server according to the sensor data.

23. The user equipment according to claim 22, wherein the data sending unit is specifically configured to: perform verification processing of an action verification code for the sensor data, and send verification result information to the server.

24. The user equipment according to claim 23, wherein the data sending unit is specifically configured to: preprocess the sensor data to obtain characteristic information of the sensor data; and perform the verification processing of the action verification code according to the characteristic information, and send verification result information to the server.

25. The user equipment according to claim 24, wherein the data sending unit is specifically configured to: extract fluctuation characteristic information of the sensor data; perform comparative verification processing for a fluctuation value in the fluctuation characteristic information and a preset threshold; and, if the fluctuation value is greater than the preset threshold, send verification result information indicative of verification success to the server.

26. The user equipment according to claim 22, wherein the data sending unit is specifically configured to: send the sensor data to the server, so that the server performs verification processing of an action verification code according to the sensor data.

27. The user equipment according to claim 26, wherein the data sending unit is specifically configured to: preprocess the sensor data to obtain characteristic information of the sensor data; and send the characteristic information of the sensor data to the server, so that the server performs the verification processing of the action verification code according to the characteristic information.

28. The user equipment according to claim 26, wherein: the data sending unit is specifically configured to preprocess the sensor data, and send the preprocessed sensor data to the server;
the preprocessing comprises at least one of the following types of processing:
processing to reduce a sampling frequency of the sensor data;
processing to extract a time domain characteristic and/or a frequency characteristic of the sensor data within a unit time window; and
processing to compress the sensor data.

29. The user equipment according to any one of claims 22 to 28, wherein the instruction receiving unit is specifically configured to receive an application service message sent by the server, wherein the action verification code instruction is embedded in the application service message.

30. A server, comprising:
a notification message sending unit, configured to send a notification message that comprises an action verification code instruction to a user equipment UE, so that the UE obtains sensor data generated when a user performs an action corresponding to the action verification code instruction;
an information receiving unit, configured to receive verification information, which is sent by the UE according to the sensor data; and
a verifying unit, configured to determine a verification result according to the verification information.

31. The server according to claim 30, wherein the information receiving unit is specifically configured to receive verification result information sent by the UE after verification processing of an action verification code is performed for the sensor data.

32. The server according to claim 30, wherein: the information receiving unit is specifically configured to receive verification result information sent by the UE after verification processing of an action verification code is performed for characteristic information, wherein
the characteristic information is characteristic information obtained after the UE preprocesses the sensor data.

33. The server according to claim 32, wherein: the information receiving unit is specifically configured to receive verification result information sent by the UE after the verification processing of the action verification code is performed according to fluctuation characteristic information, wherein
the verification result information after the verification processing comprises: verification result information indicating verification success when a fluctuation value in the fluctuation characteristic information in the sensor data is greater than a preset threshold.

34. The server according to claim 30, wherein: the information receiving unit is specifically configured to receive the sensor data sent by the UE; and
the verifying unit is specifically configured to match the sensor data with matching characteristic information to obtain a verification result.

35. The server according to claim 34, wherein: the notification message sending unit is specifically configured to send a verification code test message that comprises the action verification code instruction to at least one UE, so that the at least one UE obtains test sensor data generated when a user performs an action corresponding to the action verification code instruction;
the information receiving unit is specifically configured to receive the test sensor data sent by the at least one UE; and
the verifying unit is specifically configured to determine test sensor data of a public attribute in the test sensor data, and use the test sensor data of the public attribute as the matching characteristic information.

36. The server according to claim 35, wherein the verifying unit is specifically configured to: preprocess the test sensor data to obtain characteristic information of the sensor data; and determine characteristic information of a public attribute in the characteristic information, and use the characteristic information of a public attribute as the matching characteristic information.

37. The server according to claim 34, wherein: the notification message sending unit is specifically configured to send a verification code test message that comprises the action verification code instruction to at least one UE, so that the at least one UE obtains test sensor data generated when a user performs an action corresponding to the action verification code instruction;
the information receiving unit is specifically configured to receive the test sensor data sent by the at least one UE after the test sensor data is preprocessed; and
the verifying unit is specifically configured to determine test sensor data of a public attribute in the preprocessed test sensor data, and use the preprocessed test sensor data of a public attribute as the matching characteristic information.

38. The server according to any one of claims 30 to 37, wherein the notification message sending unit is specifically configured to send an application service message to the UE, wherein the action verification code instruction is embedded in the application service message.
